# EUROPEAN PATENT APPLICATION

(11) **EP 2 189 429 A2**
(43) Date of publication of application: **26.05.2010**
(21) Application number: 09172571.3
(22) Date of filing: 08.10.2009
(51) Int. Cl.: C04B 28/32, E04F 15/12, C04B 14/06, C04B 40/06, C04B 103/32, C04B 111/62

(54) **Composition for the manufacturing of self leveling screeds and building floorings**

(30) Priority: 08.10.2008 IT RM20080536
(71) Applicant: Eraclit-Venier S.p.A., 30175 Venezia (IT)
(72) Inventor: Franco, Leonardo, 30171, Venezia (VE) (IT)
(74) Representative: Locas, Davide

(57) **Abstract**

A composition for the manufacturing of self-levelling screeds and floorings comprises a powdered part and a liquid part. The powdered part is formed by magnesium oxide in an amount comprised between about 9% and 40% and aggregates in an amount between about 55% and 91%. The liquid part comprises a magnesium chloride solution in an amount comprised between about 20% and 50% e and poly-carboxylic superplasticising admixture in an amount higher than about 0.05% and lower than about 2%.

## Description

The present invention refers to a composition for the manufacturing of self-levelling screeds and building floorings.

In building field it is know how it is required the use of an intermediate layer, traditionally called screed, used in floorings for the levelling before laying. Just for its function of directly supporting the flooring, the screed should then have proper requirements for being suitable for this function, e.g. having a planar surface and suitable for spreading glues, not having bleeding, crazing and cracks.

As a consequence, it is evident that the screed laying off is fundamental in order to obtain the desired features.

Accordingly, normally screeds are made by pumping a cementitious composition which is levelled by means of suitable tools or mechanical devices in the so-called spreading step.

Besides such traditional screeds self-levelling screeds have been developed, which entail the advantage that they can be laid simply by pumping on the surface onto which the flooring will be manufactured.

The formulae of such screeds are normally based on cementitious compositions containing plasticising admixtures and a sufficiently high water percentage in order to obtain the above mentioned self-levelling properties.

Nevertheless, the use of cements is hardly appropriate firstly for the negative environment impact this products have. In fact, it is known how both in the manufacturing, and in the incidental disposal of wastes deriving from such manufacturing, cement have remarkable problems from an ecologic point of view.

As a consequence, besides these cementitious screeds, or to a definitely lower extend based on hydraulic limes or anhydrides, some compositions based on magnesium oxide and magnesium chloride mixtures have been developed. One example of such composition is described in the German patent DE 101 13 060 to Käser GmbH, describing a composition made by mixing a magnesium oxide containing powdered component and admixtures such as sands, stones and powdered (co)polymers, to a liquid component formed by magnesium chloride and a liquid (co)polymer. Magnesium oxide and magnesium chloride are in amount within a range from 10 % to 60 % in weight, whilst other admixtures are in variable amounts.

Nevertheless, such composition do not have self levelling properties, and accordingly it should be levelled by spreading.

As an alternative to such product several magnesium based floorings compositions exists that although being self-levelling are not suitable for being used as screeds, since they allow only the manufacturing of excessively thin layers. E.g., EP 1 627 861 describes a floorings composition comprising magnesium oxide in an amount equal to about 15 % in weight, magnesium chloride in an amount equal to about 25 %, quartz sand and a epoxy resin in a ratio varying from 1:2 to 1:4 of the magnesium chloride present in the composition.

Nevertheless, such composition only allows to manufacture floorings covering, since it only allow layers thinner than 5 mm while, on the contrary, it is required a thickness equal to several centimetres for the screeds.

Hence, the technical problem underlying the present invention is to provide a composition for the manufacturing of flooring screeds allowing to overcome the drawbacks mentioned above with reference to the known art.

Such problem is solved by the composition for the manufacturing of self levelling screeds and floorings according to claim 1, and by the method according to claim 14 and by the kit according to claim 20.

The present invention provides several relevant advantages. The main advantage lies in that the composition according to the present invention allows to manufacture a screed simply by pumping, although not having any ecological impact.

I.e. the screed according to the present invention do not require any spreading or any other analogous operation for levelling the surface thereof in order to allow the laying of the flooring, but an easy and quick tamping as normally done for cementitious or based on hydraulic limes or anhydrites self-levelling screeds.

Other advantages, features and the operation modes of the present invention will be made apparent from the following detailed description of some embodiments thereof, given by way of a non-limiting example.

The composition for the manufacturing of a self-levelling screed according to the present invention is firstly based on mixing a powdered part and a liquid part.

The powdered part is formed by a caustic magnesium oxide obtained by the medium temperatures calcination of magnesium carbonate having a suitable granulometry in rotating ovens. More precisely, the chemical-physical features of the caustic magnesium oxide are hereby summarized, once it has been powdered and it is thus ready for being used in the composition according to the present invention.
- Titre:
   MgO = 82 - 92 %
   CaO < 2.5 %
   R₂O₃ (various oxides) < 0.6%
   Insoluble residue : < 10%
   Loss on ignition (1000 °C) < 3%
   International Activity (citric acid method) = 70 - 140 seconds
- Granulometry:
   - Grains retained by sieves:: 106 micron < 1%
   63 micron < 16 %
   - Compacted specific weight:: < 1.07 kg/l

The International Activity values, which incidentally provides a measurement of the material reactivity, have been obtained according to the citric acid method and, such measurement can be performed as specified in the following.

In general, the aggressiveness of an average strong acid solution on an examined material can be sensed as a reactivity index of the material itself.

It is reminded that the material reactivity is not normally evaluated basing on empirical parameters, since for complex mixtures or for impure materials, an absolute measurement of the material to be industrially used would be excessively complex.

More precisely the definitions "activity or reactivity according to the international method" or "International Activity" refers to the time measurement (in seconds) required for the powdered calcined magnesite reacts (at a given temperature, e.g. 30 °C) with a specific medium strong acid solution , until the solution pH value the change of colour occurs in a specific indicator (e.g. phenolphthalein). An example of this method is described in Kirk-Othmer Encyclopaedia of Chemical Technology - page 405.

It is important to emphasize that the reactivity of a powdered calcined magnesite is also influenced by the available active surface, due to the granulometric distribution and to the porosity of the product and thus the set of such parameters will allow to define the features of the magnesite used in the composition according to the present invention.

During the International Activity test, it is appropriate to use only reagent having a proven analytic quality and distilled water and, in particular:
monohydrate citric acid (titre ≥ 99.8 %) ; (H₃C₆H₅O₇ · H₂O);
sodium benzoate (titre ≥ 99 %) ; (C₆H₅COONa);
1% phenolphthalein hydroalcoholic solution;
acid citric solution 0.4 N.

The test is performed by dissolving 2.5 ± 0.01 g of sodium benzoate and 280 ± 0.01 g of monohydrate citric acid in distilled water in 2 1 flask (class A) and stirring until completely dissolved.

Next, the phenolphthalein solution (20 ml) is added until the total content is equal to 2 1.

The content is then transferred to a 10 1 dark glass container and it is further diluted measuring the volumes with the 2 1 flask (this operation is repeated 4 times).

Then, a standardization and a correction of the acid citric solution 0.4 N is provided.

In addition to the above listed elements, also the following reagents are used for the standardization:
sodium hydroxide (NaOH) 1 N- that will be preserved in a firmly closed polyethylene bottle.

Then, the standardization takes place placing 100 ml of acid citric solution, which are measured with a 50 ml pipette (class A) in a 250 ml glass and titrating with a NaOH solution I N by a 50 ml burette (class A) and keeping the glass with a stirring bar on a magnetic stirrer, until the colour change of the phenolphthalein towards pale pink. It should be noted that the required amount of NaOH 1 N is about 40 ml.

With reference instead to the acid citric solution correction, for each 0.1 ml of NaOH 1N added to the 40 ml scheduled, 25 ml of distilled water should be added to the 101 of acid citric solution.

On the contrary, for each 0.1 ml of NaOH 1N used less than the 40 ml scheduled, 0.70 g of monohydrate citric acid will be added to the 10 1 of acid citric solution.

It should be noted that, in the test performed, the volumetric glassware used has an analytic accuracy, i.e. class A and, in the description of the measuring process, the use of the letter (A) next to the volumetric measure indicates that class A glassware has been used.

The glassware should also be accurately washed and dried.

Moreover, the instrumentation has the following features:
balance tared with reading precision 0.0001 g and tolerance ± 0.0005 g;
balance tared with reading precision 0.01 g and tolerance ± 0.05 g;
thermostatic cup for water at 30 °C to be placed on the stirrer;
magnetic stirrer provided with stirring bars covered with PTFE Ø 6 mm and length 3 cm;
thermometers 0 ö 50 °C at least divided in 0.5 °C, one of the thermometers being inserted in rubber cup per flask (in order to allow the reading at 30 °C);
chronometer with 1 second precision;
weighting spatula and paper;
spoon.

It is also advisable to use powdered calcined magnesite having a known activity as a reference sample.

The material will be suitable preserved in hermetic containers that can be identified with a label having references regarding the type, date and features.

The adjusting of the magnetic stirring bar revolutions is required if the deviation between activity value is not comprised in the tolerated repeatability statistic error of ± 3 seconds, after tests on the latest two samples.

The test method starts with preparing the sample which is taken and identified and placed in a dry and clean container with hermetic closure. The sample is the homogenized by energetically stirring the container and if required by using the spoon for dispersing incidental big agglomerations (delicately operating for avoiding the alteration of the grain size).

Then, the measuring of the International Activity requires to measure with a 50 ml pipette (A) 100 ml of acid citric solution 0.4 N and to pour it in a 250 ml flask.

Then the magnetic stirring bar is placed in the flask and the latter is closed with the rubber cup with the thermometer inserted, placed so as to be drawing in the liquid, without touching the stirring bar.

In the following, the solution is heated to 30 °C placing the flask in the thermostatic cup with water at 30 °C disposed on the plate of a magnetic stirrer.

Once the temperature of 30 °C is reached in the flask, 2 ± 0.0010 g of magnesite under test are introduced with a single quick move, avoiding the adhesion of grains on the flask walls. Such operation and the next are performed in a thermostatic room but without keeping the flask in water so as not to distort the kinetic, which is function of the increasing of temperature caused by the exothermic features of the reaction.

The flask is the placed on the stirrer, and isolated from a direct contact with the metallic plate.

In order to perform the measuring the chronometer and the magnet revolution are simultaneously operated, the revolution being incidentally strong enough for obtaining an energetic stirring.

The time in seconds required in order to the phenolphthalein in the solution makes the colour of the suspension appear pale pink, that could be recorded by the chronometer in seconds, therefore provided the measuring of the International Activity.

Then, the composition according to the present invention comprises caustic magnesium oxide with the above mentioned features in an amount in weight varying from about 9% of the total weight of the powdered part to about 40% of the powdered part. The percentage of magnesium oxide will be selected according to the mechanical properties desired for the screed. In particular, an higher amount of magnesium oxide will give the finished product an higher mechanical strength both for short and long seasonings.

Besides magnesium oxide, the powdered part further comprises some aggregates, used in a suitable granulometric curve and, in particular, with a granulometry lower than or equal to about 4 mm. The aggregates, which can comprises e.g. silica sands, Quartzites, Dolomites, Carbonates, or mixtures thereof, are present in an amount in weight comprised between about 55% and about 91% of the total weight of the powdered part. Such aggregates have the function of reducing the formula cost, limiting the dimensional variations (shrinkage) during the setting and hardening steps and their amount is choose according to the expected final mechanical features of the screed.

According to a preferred embodiment, the powdered part further comprises some anti-setting agents, in an amount in weight that could be lower or equal to 5% of the total weight of the powdered part.

Such anti-setting agents could consist of e.g. cellulose ethers, Guar derivatives or mixtures thereof, Bentonites or organically modified Hectorites, Silica Fume, Microsilica, and they are added to the powdered part in order to avoid or reduce the setting i.e. the sedimentation of the aggregates from the screed in its "fluid" state.

Opposite to the screeds manufactured according to the known art, wherein the powdered cementitious part is normally mixed with water, in the composition according to the present invention, the powdered part is mixed with a liquid part comprising a solution of magnesium chloride in an amount in weight comprised between about 20% and about 50% of the total weight of the powdered part and poly-carboxylic superplasticising admixture, in solution 50% dry, in an amount in weight comprised between about 0.05% and about 2%. As superplasticising admixture can be used the normally available in the market superplasticising admixtures, used for enhancing the fluidity of concrete casting which are well know to the person skilled in the art.

The solution of magnesium chloride has preferably a density comprised between about 20 °Be and 30 °Be, corresponding to a density comprised between about 1.16 g/cm³ and circa 1.26 g/cm³.

By means of the mechanical mixing of the powdered part with the correct amount of the liquid part it will be thus possible to obtain a very fluid, self-levelling, easy to pump, easily workable mortar, with which it will be possible to manufacture screeds for floor foundations having optimal planarity for thicknesses until 8-10 cm and, as a consequence, usable, opposite to the know magnesitic products for self-levelling floorings, also for screeds applications for the laying of tiles of other kind of flooring. It is evident that the composition hereby described could be also used for smaller thicknesses and per finished floorings, thus without the laying of a further layer. To this regard, it should be noticed that the composition according to the present invention also allows to obtain such finished floorings by means of a smoothing, since, once the casting has been performed and hardened, it advantageously has an optimal aesthetic appearance than the known cementitious products.

Such capabilities are also connected to the high mechanical compression strength that the composition according to the present invention allows to obtain. In particular, the values of mechanical compression strength vary from about 25 N/mm² to about 50 N/mm² according to the amount of caustic magnesium oxide in the powdered part, after a 28 days curing.

At the same time, the screed realized with the composition according to the present invention will have a compact, hard surface, capable of being covered and, as an alternative, suitable for being used a walkable flooring.

### EXAMPLE

100 parts of powdered mixture formed by 11 % of caustic magnesium oxide, 0.25% admixtures, 88.75% aggregates (i.e. silicates and carbonates) mixed with 24.6 parts of magnesium chloride solution at 22°Be (said solution further comprises the superplasticising admixture) for three minutes with an EN 196 standard compliant laboratory mixer, having a spilling of 295 mm (with a EN 196 cone) measure without shaking, and casted in specimen moulds 4x4x16 cm (EN 196 compliant), cured for 24 hours at 20±1 °C and then withdrawn, gave the following mechanical results:

| Curing time | Bending strength N/mm² | Compression strength N/mm² |
|---|---|---|
| 2 days | 4.7 | 16.16 |
| 7 days | 4.85 | 22.95 |
| 28 days | 5.15 | 26.10 |

It should be noted that the composition thus obtained could be considered ecologic as magnesium oxide and magnesium chloride do not harm anyhow either men or environment, being also used in the alimentary field. Moreover, the production of magnesium oxide is ecologic by itself since, taking place at lower temperatures than other binders (e.g. cement), it requires fewer energy and accordingly has a lower environmental impact. Finally, the amount of synthesis admixtures in the formula is low.

The product could be provided to the building yard loose and/or in packs analogously to common self-levelling screeds, then mixed, pumped, laid with the same equipments for common self-levelling screeds.

In fact, another relevant advantage is the fact that the composition according to the present invention is pumpable and workable as the common self-levelling screeds.

Moreover, it has been experimentally found that, after the end of the setting, a rapid enhancement of the mechanical strength takes place and, in particular, after 24 hours from the casting compression strength value equal to 14.5 N / mm² can be obtained and, in general, after 48 hours from the casting value higher than 60% of the final compression strength.

Moreover, it should be noted that the use as finished flooring, i.e. without any laying of further layers, is also made possible by the absence of shrinkage flaws, which is particularly appreciated in such applications.

Then, thanks to the used components, the screed manufactured with the composition according to the present invention is antistatic and, also in this case, such feature is particularly advantageous in case of using the screed as finished flooring.

Finally, it should be noted also that productivity is particularly high, about 500-800 m²/day, and therefore it allows to obtain values in terms of squared meters/day substantially analogous to the ones of an optimal cementitious self-levelling manufactured according to the known art.

The present invention has hereto been described with reference to preferred embodiments thereof. It is understood that there could be other embodiments referable to the same inventive kernel, all falling within the protective scope of the claims set forth hereinafter.

## Claims

1. A composition for the manufacturing of self levelling screeds and floorings comprising:
• a powdered part comprising magnesium oxide in an amount higher than about 9% of the total weight of said powdered part and lower than about 40% of the total weight of said powdered part, and aggregates in an amount higher than about 55% of the total weight of said powdered part and lower than about 91% of the total weight of said powdered part;
• a liquid part comprising a solution of magnesium chloride in an amount higher than about 20% and lower than about 50% of the total weight of said powdered part and poly-carboxylic superplasticising admixture in an amount higher than about 0.05% and lower than about 2% of the total weight of said powdered part.

2. The composition according to claim 1, wherein said powdered part further comprises anti-setting agents, in an amount in weight lower or equal to about 5% of the total weight of said powdered part.

3. The composition according to claim 2, wherein said anti-setting agents comprise one or more among the following components: cellulose ethers, Guar derivatives, Bentonites or organically modified Hectorites, Silica Fume, microsilica.

4. The composition according to any of the preceding claims, wherein said solution of magnesium chloride has a density comprised between about 1.07 g/cm³ and circa 1.26 g/cm³.

5. The composition according to any of the preceding claims, wherein said aggregates have a granulometry lower than or equal to about 4 mm.

6. The composition according to any of the preceding claims, wherein said magnesium oxide has a reactivity, measured according to the method of the International Activity by reacting with citric acid, higher than about 70 seconds and lower than about 140 seconds.

7. The composition according to any of the preceding claims, wherein said magnesium oxide has a granulometry such that the percentage of grains retained by a 106 µm sieve is lower than about 1% and the percentage of grains retained by a 63 µm sieve is lower than about 16%.

8. The composition according to any of the preceding claims, wherein said magnesium oxide has a amount of MgO higher than about 82% and lower than about 92%, a amount of CaO lower than about 2.5 %, and of various oxide R₂O₃ lower than about 0.6%.

9. The composition according to any of the preceding claims, wherein said magnesium oxide has a insoluble residue lower than about 10%, a loss on ignition at 1000 °C lower than 6% and a compacted specific weight lower than about 1.07 kg/l.

10. The composition according to any of the preceding claims, wherein said poly-carboxylic superplasticising admixture are provided in a solution 50% dry.

11. A method for the manufacturing screeds and floorings, comprising the steps of:
• providing a powdered part comprising magnesium oxide in an amount higher than about 9% of the total weight of said powdered part and lower than about 40% of the total weight of said powdered part, and aggregates in an amount higher than about 45% of the total weight of said powdered part and lower than about 91% of the total weight of said powdered part;
• providing a solution of magnesium chloride in an amount higher than about 20% and lower than about 50% of the total weight of said powdered part and poly-carboxylic superplasticising admixture in an amount higher than about 0.05% and lower than about 2% of the total weight of said powdered part;
• preparing a composition by mixing said powdered part and said liquid part;
• pumping said composition on a laying surface.

12. The method according to claim 11, wherein said powdered part further comprises anti-setting agents, in an amount in weight lower or equal to about 5% of the total weight of said powdered part.

13. The method according to claim 12, wherein said anti-setting agents comprise one or more among the following components: cellulose ethers, Bentonites or organically modified Hectorites, Silica Fume, Microsilica.

14. Method according to any of claims 11 a 13, wherein said solution of magnesium chloride has a density comprised between about 1.07 g/cm³ and about 1.26 g/cm³.

15. Kit per the manufacturing of self-levelling screeds comprising a first packing comprising a powdered part as described in any of claims 1 to 10, a second packing comprising a liquid part as described in any of claims 1 to 10 and instruction per the mixing of said powdered part and said liquid part so as to obtain a composition as described in any of claims 1 to 10.

16. The method according to claim 15, wherein said anti-setting agents comprise one or more among the following components: cellulose ethers, Bentonites or organically modified Hectorites, Silica Fume, Microsilica.

17. Method according to any of claims 14 a 16, wherein said solution of magnesium chloride has a density comprised between about 1.07 g/cm³ and about 1.26 g/cm³.

18. Method according to any of claims 14 a 17, wherein said aggregates comprise one or more among the following components: silica sands, Quartzites, Dolomites and Carbonates.

19. Method according to any of the preceding claims, wherein said poly-carboxylic superplasticising admixture are provided in solution 50% dry.

20. Kit per the manufacturing of self-levelling screeds comprising a first packing comprising a powdered part as described in any of claims 1 to 13, a second packing comprising a liquid part as described in any of claims 1 to 13 and instruction per the mixing of said powdered part and said liquid part so as to obtain a composition as described in any of claims 1 to 13.
